# DEMANDE DE BREVET EUROPEEN

(11) **EP 3 287 976 A1**
(43) Date de publication de la demande: **28.02.2018**
(21) Numéro de dépôt: 17187404.3
(22) Date de dépôt: 23.08.2017
(51) Int. Cl.: G06Q 30/02, H04N 21/81

(54) **SYSTÈMES ET PROCÉDÉS DE MESURE DE L'ATTENTION D'UN UTILISATEUR À UNE PUBLICITÉ VIDÉO DANS UNE PAGE INTERNET**

(30) Priorité: 26.08.2016 FR 1657983
(71) Demandeur: Mediabong, 75002 Paris (FR)
(72) Inventeur: BURY, Laurent, 75015 PARIS (FR); CLAUDON, Pierre, 54500 VANDOEUVRE-LES-NANCY (FR); MEHL, Khalid, 92000 NANTERRE (FR)
(74) Mandataire: Casalonga

(57) **Abrégé**

Procédé de mesure de l'attention d'un utilisateur à au moins une publicité vidéo dans une page internet,
la page internet comprenant au moins un emplacement vidéo apte à afficher une publicité vidéo.

Le procédé comprend des étapes au cours desquelles :
lorsqu'une publicité vidéo est affichée dans au moins un emplacement vidéo,
on mesure des événements liés à au moins un parmi la structure de la page internet comprenant les emplacements vidéo dans lesquels la publicité vidéo est affichée et les actions de l'utilisateur,
on détermine au moins un critère lié aux événements mesurés,
on détermine ensuite une mesure de l'attention en fonction des valeurs des critères.

## Description

L'invention a pour domaine technique la diffusion de contenus vidéo dans des pages internet, et plus particulièrement la diffusion de publicités vidéo en fonction du comportement de l'utilisateur.

Les sites internet et applications, notamment applications mobiles pour smartphone (téléphone intelligent, en langue française) comprennent des documents ou pages (généralement au format html), pouvant conjuguer plusieurs types de contenus tel que des textes, des images, et des vidéos, issus tant de contenus éditoriaux propres au site que de contenus publicitaires généralement issus de tiers fournisseurs de publicités vidéo.

Dans le cas particulier des contenus publicitaires sous forme de vidéos, ils peuvent être insérés de façon manuelle et statique ou de façon dynamique au sein desdites pages.

D'une manière générale, les contenus vidéo sont lus au moyen d'un programme de lecture vidéo. Actuellement, de tels programmes de lecture vidéo utilisent le plus souvent une technologie dite de « streaming » permettant le transfert en temps réel des données permettant d'afficher la vidéo sans nécessiter le transfert de la totalité de la vidéo avant d'en démarrer la lecture.

Des systèmes publicitaires permettent d'afficher une publicité vidéo, avant, pendant ou après la diffusion d'un contenu vidéo, dans le cas d'une publicité dite « in-stream » ou sans le support d'un contenu vidéo, dans le cas d'une publicité dite « outstream ».

Le démarrage de ces publicités vidéos peut être initié activement par l'utilisateur, automatiquement à l'affichage de la page, ou activées par le déroulement de la page par l'utilisateur.

Ces publicités vidéo peuvent être ciblées selon des critères variés, principalement selon les caractéristiques prédites ou connues de l'utilisateur telles que les caractéristiques socio-démographiques ou l'historique de comportement.

Ces publicités peuvent être délivrées de diverses façons : suite à un appel statique (appel à une page internet tierce comprenant la publicité depuis la page internet d'accueil), un appel dynamique (appel à une page internet tierce comprenant la publicité incluant des paramètres ou des métadonnées) ou un appel sous forme programmatique (enchères en temps réel pour l'utilisation de l'emplacement publicitaire).

Toutefois, quels que soient les modes de diffusion et de démarrage choisis, les publicités vidéo sont actuellement limitées à des emplacements prédéfinis, qui peuvent ne plus se situer dans le champ de vision de l'utilisateur lors du déroulement d'une page internet. Dans un tel cas, la publicité qui est diffusée à destination de l'utilisateur n'est en réalité par vue par celui-ci. Il en découle notamment des statistiques de diffusion faussées.

Compte tenu de l'encombrement publicitaire croissant dans les pages Internet, l'attention de l'utilisateur devient une variable déterminante de l'efficacité d'une publicité.

De l'état de la technique antérieure, on connaît le document US 9,143,840 qui décrit une mesure de visibilité des publicités vidéos dans une page Internet. Toutefois, cette mesure ne prend en considération que deux critères, la visibilité de la surface du programme de lecture vidéo dans la page internet et la durée pendant laquelle la publicité vidéo est effectivement lue. De plus, ces critères sont pris en compte de façon disjointe dans l'établissement de la mesure.

Il existe un besoin pour une mesure de l'attention d'un utilisateur à une publicité vidéo qui prenne en compte simultanément plusieurs critères distincts.

L'invention a pour objet un procédé de mesure de l'attention d'un utilisateur à au moins une publicité vidéo dans une page internet, la page internet comprenant au moins un emplacement vidéo apte à afficher une publicité vidéo.

Le procédé comprend des étapes au cours desquelles :
lorsqu'une publicité vidéo est affichée dans au moins un emplacement vidéo,
on mesure des événements liés à au moins un parmi la structure de la page internet comprenant les emplacements vidéo dans lesquels la publicité vidéo est affichée et les actions de l'utilisateur,
on détermine au moins un critère lié aux événements mesurés,
on détermine ensuite une mesure de l'attention en fonction des valeurs des critères.

La mesure des événements peut être ponctuelle ou périodique à l'issue d'un intervalle de temps prédéterminé.

Un critère peut être lié à au moins un parmi la visibilité de l'emplacement vidéo dans le champ de vue de l'utilisateur, le rapport entre la surface de l'emplacement vidéo par la surface totale de l'écran visible de l'utilisateur, la position absolue de l'emplacement vidéo dans l'écran actif de l'utilisateur, la position du curseur de la souris dans la page, l'encombrement iconographique à proximité de l'emplacement vidéo, la vitesse de déplacement de l'utilisateur dans la page, les interactions de l'utilisateur avec l'emplacement vidéo, la durée de lecture de la publicité vidéo, et le mode de démarrage de la vidéo.

Après la mesure des événements, et avant la détermination d'au moins un critère, on peut réaliser un retraitement des mesures afin de ne pas tenir compte des événements mesurés pendant que la publicité vidéo n'est pas affichée, des événements mesurés avant le démarrage effectif de l'affichage de la publicité vidéo, des événements mesurés après une durée maximale d'affichage de la publicité vidéo, des événements mesurés en relation avec une mesure de la taille et de la position de l'emplacement vidéo supérieur à une valeur seuil liée à la taille de la page et/ou de l'écran actif.

Lorsque l'on affiche une première publicité vidéo pour un premier produit et pour une première marque,
on peut déterminer si la mesure de l'attention de l'utilisateur est inférieure à un premier seuil,
si tel est le cas, on peut interrompre la diffusion de la première publicité vidéo, et on détermine de ne pas proposer de nouveau la première publicité vidéo, et on commande l'affichage d'une autre publicité vidéo pour une marque et un produit autre que le premier produit de la première marque.
si tel n'est pas le cas, on peut déterminer si la mesure de l'attention de l'utilisateur est inférieure à un deuxième seuil supérieur au premier seuil,
si tel est le cas, on peut commander l'affichage d'une deuxième publicité vidéo, différente de la première vidéo, pour le premier produit et la première marque,
si tel n'est pas le cas, on peut commander alors l'affichage d'une troisième publicité vidéo de la première marque pour un produit autre que le premier produit, ou pour le même produit mais présentant au moins une caractéristique ou information différente de celles présentées dans la première publicité vidéo.

Les résultats de mesure de l'attention par rapport à un produit et/ou à une marque peuvent être conservés lors du changement de page internet par l'utilisateur.

Les résultats de mesure de l'attention par rapport à un produit et/ou à une marque peuvent être conservés lorsqu'un nouvel emplacement vidéo diffuse la publicité vidéo dans la page internet vue par l'utilisateur.

L'invention a également pour objet un système de mesure de l'attention d'un utilisateur à au moins une publicité vidéo dans une page internet, la page internet comprenant au moins un emplacement vidéo apte à afficher une publicité vidéo. Le système comprend un script compris dans la page internet, apte à mesurer des événements liés à au moins un parmi la structure de la page internet comprenant au moins un emplacement vidéo dans lesquels la publicité vidéo est affichée et les actions de l'utilisateur, un programme de lecture vidéo exécuté par l'utilisateur apte à requérir la publicité à afficher et à commander l'affichage de la publicité vidéo dans au moins un emplacement vidéo de la page internet, et une plate-forme publicitaire apte à recevoir les requêtes de publicités vidéo du programme de lecture vidéo, à adresser des requêtes de publicité à des tiers fournisseurs de publicités vidéo et à émettre une publicité vidéo ou une liste de publicités vidéo à destination du programme de lecture vidéo en fonction des informations reçues du script,
le script et la plate-forme publicitaire sont aptes à coopérer afin de déterminer une mesure de l'attention d'un utilisateur en fonction des événements mesurés par le script.

Le système peut comprendre un conteneur comprenant la publicité vidéo et le script, le conteneur étant ouvert par le programme de lecture vidéo, le script étant adressé au navigateur internet pour être exécuté, la publicité vidéo étant affichée par le programme de lecture vidéo dans au moins un emplacement vidéo de la page internet.

Le script peut être apte à déterminer au moins un critère lié aux événements mesurés, et à déterminer ensuite une mesure de l'attention en fonction des valeurs de ces critères et à l'émettre à destination de la plate-forme publicitaire.

La plate-forme publicitaire peut être apte à déterminer au moins un critère lié aux événements mesurés par le script, et à déterminer ensuite une mesure de l'attention en fonction des valeurs de ces critères.

Dans le cadre d'un système de reciblage de la publicité vidéo affichée à l'utilisateur, la plate-forme publicitaire peut être apte à déterminer la publicité vidéo à afficher en fonction de la comparaison de la mesure d'attention à au moins un seuil prédéterminé.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments du système selon l'invention,
- les figures 2a et 2b illustrent les principaux éléments d'un critère lié à la visibilité de l'emplacement vidéo dans le champ de vue de l'utilisateur,
- la figure 2c illustre les principaux éléments d'un critère lié à la position absolue de l'emplacement vidéo dans l'écran actif de l'utilisateur, illustrée par la figure 2c, et
- la figure 2d illustre les principaux éléments d'un critère lié à l'encombrement iconographique à proximité de l'emplacement vidéo.

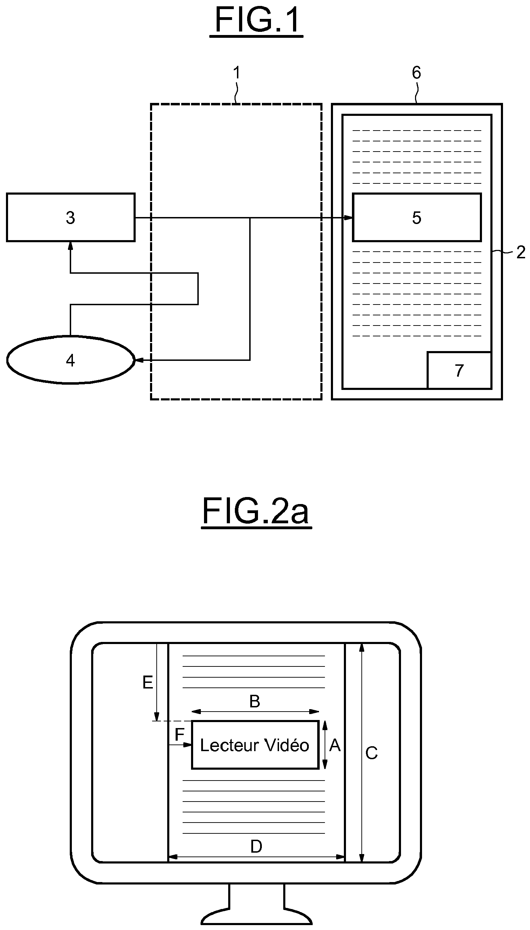

La figure 1 illustre les principaux éléments du système selon l'invention. Un utilisateur, notamment un internaute, se connecte à un réseau 1, notamment le réseau internet au moyen d'un appareil (tel qu'un ordinateur, un téléphone intelligent, une télévision connectée ou tout autre dispositif adapté,...). L'utilisateur émet alors une requête d'accès et de visualisation à destination d'une page internet. Il reçoit en retour des données permettant l'affichage de la page internet sur l'appareil utilisé pour se connecter au réseau, ainsi que l'interaction de l'utilisateur avec la page. L'alternance de requêtes et de données reçues en retour se poursuit à chaque nouvelle action de l'utilisateur.

Lorsque la page internet appelée 2 comprend le procédé selon l'invention, celui-ci communique avec une plate-forme publicitaire 3 en mesure de délivrer une publicité vidéo ou de faire appel à un ou plusieurs tiers fournisseurs de publicités vidéo. La plate-forme sélectionne le cas échéant une publicité vidéo 4 et la transmet à un programme de lecture vidéo 5, compris dans la page internet. Ladite publicité vidéo 4 est affichée dans au moins un emplacement vidéo de la page internet.

Le procédé de mesure de l'attention est exécuté localement sur l'appareil de l'utilisateur 6 via un script 7, ou à distance sur la plate-forme publicitaire 3 en fonction des mesures reçues du script, ou par une combinaison d'exécutions locales et à distance.

Le procédé de mesure comprend une première étape au cours de laquelle on mesure des événements, ponctuellement ou périodiquement à l'issue d'un intervalle de temps prédéterminé liés à au moins un parmi la structure de la page internet comprenant les emplacements vidéo dans lesquels la publicité vidéo est affichée et les actions de l'utilisateur. Au cours d'une deuxième étape, on détermine au moins un critère lié aux événements mesurés. Au cours d'une troisième étape, on détermine ensuite une mesure de l'attention en fonction des valeurs prises par ces critères.

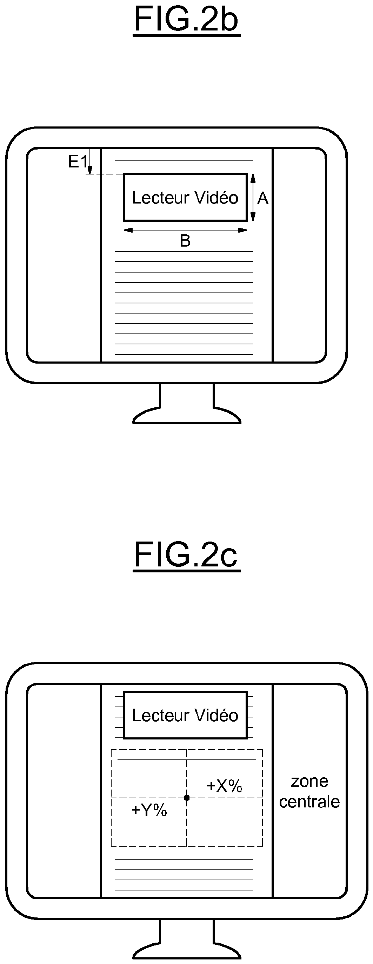

Un premier critère est lié à la visibilité de l'emplacement vidéo dans le champ de vue de l'utilisateur, illustré par les figures 2a et 2b.

Pour réaliser cela, on détermine le champ de vue de l'utilisateur, on détermine la partie de la page internet entrant dans le champ de vue de l'utilisateur caractérisée par la longueur C et la largeur D d'affichage de la page.

L'homme du métier comprendra que le champ de vue de l'utilisateur est déterminé par la résolution du dispositif d'affichage combinée au rapport d'échelle ou zoom employé. Sur un ordinateur, le dispositif d'affichage est par exemple l'écran ou un vidéoprojecteur. Sur un téléphone intelligent, il s'agit généralement de l'écran.

On détermine ensuite la position absolue de l'emplacement vidéo dans la page (par ses coordonnées horizontale F et verticale E). On en déduit alors le premier critère lié au rapport de la surface de l'emplacement vidéo entrant dans le champ de vue par la surface totale de la page internet visible dans l'écran actif.

Cette position absolue et le premier critère sont recalculés en boucle à intervalle de temps réguliers, de façon à prendre en compte soit le déplacement de la page dans l'écran suite à une action de l'utilisateur (notamment un déplacement dans la page de type « scroll »), soit un déplacement de l'emplacement vidéo actif au sein de la page lorsqu'une publicité vidéo est synchronisée sur plusieurs emplacements vidéo.

Un deuxième critère est lié à la taille de l'emplacement vidéo dans l'écran actif de l'utilisateur.

On détermine la surface de l'emplacement vidéo ainsi que la surface totale de l'écran visible de l'utilisateur. Dans le cas d'une consultation sur un appareil mobile, ces variables pourront être mesurées à chaque intervalle de temps ou à chaque changement de taille qui serait induite par exemple par la rotation de l'écran et le redimensionnement des éléments de la page.

Le deuxième critère est lié au rapport entre la surface de l'emplacement vidéo par la surface totale de l'écran visible de l'utilisateur.

Un troisième critère est lié à la position absolue de l'emplacement vidéo dans l'écran actif de l'utilisateur, illustrée par la figure 2c.

Indépendamment de sa position au sein de l'écran, le fait que l'emplacement vidéo affiche une publicité vidéo dans une position centrale de l'écran, dite « zone d'attention », renforce la probabilité d'attention de l'utilisateur. On définit la « zone d'attention » comme la zone s'étendant depuis le centre de la page, de part et d'autre verticalement à un premier pourcentage de la hauteur totale de l'écran, et horizontalement à un deuxième pourcentage de la largeur totale de la page dans l'écran.

Le troisième critère est déterminé comme le pourcentage de la surface de l'emplacement vidéo entrant dans la zone d'attention.

Un quatrième critère est lié à la position du curseur de la souris dans la page. En effet, on considère qu'un curseur de souris se rapprochant de la surface d'affichage de l'emplacement vidéo signale une attention renforcée de l'utilisateur. A noter que lors de l'affichage d'une page internet sur un appareil tactile (téléphone mobile, tablette, ordinateur à écran tactile), l'absence de souris et de curseur conduit à ignorer ce critère.

A compter du démarrage de la publicité vidéo, on enregistre, à intervalle de temps régulier, la position du curseur dans l'écran, et on détermine si celui-ci se rapproche de la zone d'affichage de l'emplacement vidéo diffusant la publicité vidéo.

Plus précisément, le quatrième critère peut être déterminé comme une fonction décroissante avec la distance entre la position du curseur dans l'écran et la position de la zone d'affichage de l'emplacement vidéo diffusant la publicité vidéo.

Par ailleurs, on ignore les cas où le curseur de la souris est positionné à l'extérieur de la page internet.

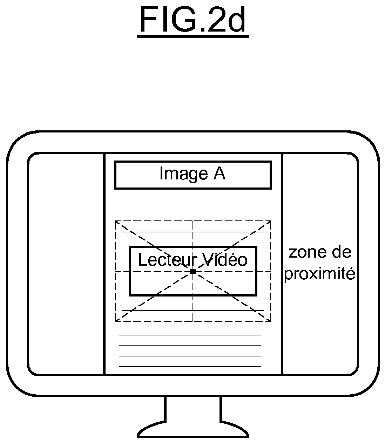

Un cinquième critère est lié à l'encombrement iconographique à proximité de l'emplacement vidéo illustré par la figure 2d.

La présence d'autres vidéos, texte ou d'images à proximité de l'emplacement vidéo sont susceptibles de perturber l'attention de l'utilisateur. On détermine la position et la surface de toutes les vidéos ou images situées dans une zone s'étendant autour de l'emplacement vidéo, par exemple une zone s'étendant sur une fois et demie la hauteur et la largeur de la zone d'affichage de l'emplacement vidéo.

On considère que l'attention accordée à la publicité vidéo baisse quand il y a des contenus attractifs autour de l'emplacement vidéo. L'attention de l'utilisateur est donc fonction décroissante du nombre d'éléments attractifs autour de l'emplacement vidéo et de leurs typologies.

On détermine donc le type d'éléments (images, textes, vidéos, etc..) et leur nombre se trouvant dans la zone s'étendant autour de l'emplacement vidéo. Par exemple on détermine le nombre Na d'éléments textuels, le nombre Nb d'éléments iconographiques, le nombre Nc d'éléments vidéo, puis on affecte des poids Xa, Xb, Xc aux nombres d'éléments Na, Nb, Nc avec Xc > Xb >Xa.

On détermine le cinquième critère comme le nombre d'éléments divisé par la somme du nombre d'éléments pondérés.

Un sixième critère est lié à la vitesse de déplacement de l'utilisateur dans la page. On estime qu'un déplacement rapide conduisant à mettre l'emplacement vidéo hors de la zone de visibilité signale un manque d'attention à l'égard de la publicité vidéo (voire un rejet si ce déplacement a lieu peu après le démarrage de la publicité vidéo).

On détermine la vitesse de déplacement de la page dans l'écran en suivant l'évolution de la position absolue d'un point de référence de la page internet à intervalles de temps réguliers (toutes les secondes par exemple). Ce déplacement de la position (en pixel) étant essentiellement vertical (lecture du contenu dans la page internet), on peut rapporter ce déplacement au temps écoulé (ici des secondes) depuis le dernier suivi de position de sorte à définir une vitesse. On compare ensuite cette vitesse à un seuil de sorte à déterminer s'il s'agit d'une vitesse rapide ou d'une vitesse lente.

On détermine également l'évolution de la vitesse de déplacement de la page. Un déplacement de la page unitaire correspondant à un déplacement important dans un temps court perturbe l'attention. Un déplacement de la page continu démontre souvent que l'attention est sur le texte.

Le sixième critère est une fonction décroissante du nombre de déplacements lors de l'affichage de la publicité vidéo, de leur vitesse et du caractère continu ou unitaire de ces déplacements.

Un septième critère est lié aux interactions de l'utilisateur avec l'emplacement vidéo.

On détermine périodiquement, au moins l'une des conditions parmi l'activation du son de la publicité vidéo dans l'emplacement vidéo, la fermeture par l'utilisateur de l'emplacement vidéo, l'activation par l'utilisateur dans l'emplacement vidéo d'un bouton de type « ignorer l'annonce » permettant d'abréger la publicité vidéo et l'activation par l'utilisateur d'un lien du contenu vidéo (renvoyant en général vers la page internet de la marque ou du produit) ou certains de ses éléments dans le cas d'une publicité vidéo enrichie (par exemple, le partage de la publicité vidéo sur un réseau social, activation d'un élément textuel ou graphique en surimpression du flux vidéo, incitant l'utilisateur à accomplir une action, profiter d'une offre, etc.).

Ces conditions peuvent être classées en deux familles : les signaux d'attention forte et d'engagement (activation du son, activation d'un lien du contenu vidéo ou de ses éléments) et les signaux d'attention faible (désactivation du son, fermeture de l'emplacement vidéo ou activation dans l'emplacement vidéo d'un bouton de type « ignorer l'annonce »).

Le septième critère est une fonction croissante liée à la durée d'affichage de la publicité vidéo avec le son actif. A contrario, le septième critère ne varie pas lors de l'affichage de la publicité vidéo avec le son inactif.

La fermeture de l'emplacement vidéo ou l'activation dans l'emplacement vidéo d'un bouton de type « ignorer l'annonce » montrent une faible attention accordée à la publicité vidéo de la part de l'internaute, ce qui diminue la valeur du septième critère.

L'activation d'un lien du contenu de la vidéo ou un de l'un de ses éléments démontre que la vidéo a capté l'attention de l'internaute, ce qui augmente la valeur du septième critère.

On détermine le septième critère en fonction de la durée d'affichage de la publicité vidéo avec le son actif ou inactif, de la fermeture de l'emplacement vidéo ou l'activation dans l'emplacement vidéo d'un bouton de type « ignorer l'annonce » et de l'activation d'un lien du contenu de la vidéo ou de l'un de ses éléments.

Un huitième critère est lié à la durée de lecture de la publicité vidéo.

On mesure à chaque intervalle de temps le statut de lecture de la publicité vidéo (en lecture ou en pause).

Dans un mode de réalisation, cette donnée est collectée via un événement fourni par un programme de lecture vidéo. Par exemple, il est connu que les programmes de lecture vidéo employés à des fins publicitaires génèrent un événement lorsque la vidéo démarre, atteint 25%, 50%, 75% et 100% de sa durée totale via les normes VAST & VPAID.

Lorsque la norme ou le programme de lecture vidéo ne renvoie pas d'information plus précise que cet événement par quartile de durée, on peut affiner la mesure en conservant une « frame » (ou image composant le flux vidéo) à chaque intervalle de temps, puis en comparant, une « frame » de l'instant t et une « frame » de l'instant t+1 et en déterminant si elles sont identiques ou différentes. Si les « frames » sont différentes, on conclut que la lecture de la vidéo a progressé.

Il est à noter que les premières secondes de diffusion de la publicité vidéo sont souvent subies par l'utilisateur puisque la publicité vidéo peut démarrer sans qu'il l'ait demandé. La contribution des événements recueillis pendant les premières secondes est traitée avec un poids inférieur à la contribution des intervalles de temps suivants.

On peut alors attribuer un poids différent à chaque intervalle de temps en fonction du comportement de l'internaute, du format publicitaire, du mode de démarrage ou de la publicité vidéo.

Le huitième critère varie comme une fonction pondérée croissante dépendant de la durée de lecture écoulée, la pondération augmentant avec la durée écoulée.

Un neuvième critère est lié au mode de démarrage de la vidéo.

On détermine le mode de démarrage de la publicité vidéo. On peut donner les exemples suivants de démarrages : démarrage de la publicité vidéo initié par l'utilisateur par un clic sur l'emplacement vidéo, par passage de sa souris sur l'emplacement vidéo ou encore démarrage automatique dès l'affichage de l'emplacement vidéo dans la page internet, ou dès que le mouvement de la page internet dans l'écran rend l'emplacement vidéo visible.

On détermine le neuvième critère en fonction de l'interaction de l'utilisateur avec l'emplacement vidéo. Une interaction plus importante (par exemple, un clic sur l'emplacement vidéo) est associée à une valeur plus importante du neuvième critère. Par opposition, une interaction plus faible (par exemple, un démarrage automatique de la publicité vidéo) est associée à une valeur plus faible du neuvième critère. Parmi les modes de démarrage de publicité vidéo communément employés, on peut citer, par ordre d'interaction décroissante, un démarrage au clic, un démarrage au survol de l'emplacement vidéo par le curseur de la souris, et un démarrage automatique.

Le neuvième critère est pris en compte dans la détermination de la mesure d'attention comme un coefficient pondérateur affectant tous les autres critères.

Apres la détermination des critères, on réalise un retraitement des mesures.

On élimine des événements pris en compte dans la détermination des critères et de la mesure de l'attention les événements mesurés pendant que le programme de lecture vidéo est en pause ou inactif (la visibilité n'ayant alors plus de sens) ou dès que la publicité vidéo a été fermée ou "zappée".

On élimine également les événements mesurés après une durée maximale d'affichage de la publicité vidéo. La durée maximale d'affichage peut correspondre à la durée totale de la publicité vidéo ou à une durée prédéfinie lorsque le programme de lecture vidéo n'est pas apte à communiquer la durée totale de la publicité vidéo au script de mesure.

Plus particulièrement, dans le cas où ce n'est pas le programme de lecture vidéo qui initialise le script de collecte, on élime les mesures de visibilité pouvant avoir lieu avant le démarrage effectif de l'affichage de la publicité vidéo. Dans le cas où le programme de lecture vidéo ne renvoie pas d'événement de fin de lecture (vidéo vue jusqu'au bout), et où la durée totale de la vidéo est inconnue, on considère que la durée de visualisation ne peut excéder un plafond (30 secondes par exemple, qui est la durée majoritaire des publicités vidéo) et on supprime les événements comptabilisés après cette durée plafond.

On déduit la durée totale de la publicité vidéo (dans le cas où celle-ci n'est pas communiquée au script) sur base du temps de lecture effectivement écoulé lorsque l'événement 25% de lecture est adressé par le programme de lecture vidéo.

On s'assure que la mesure de la taille et de la position de l'emplacement vidéo est compatible avec la taille de la page et de l'écran actif (par exemple, que la taille de l'emplacement vidéo ne dépasse pas 80% de la taille de la page), et que l'emplacement vidéo n'est pas affiché dans la page via un module dont le statut serait caché. Si les conditions ne sont pas vérifiées, le procédé est interrompu.

Le procédé calcule une mesure de l'attention incrémentale qui s'actualise au fur et à mesure que la publicité vidéo avance en combinant (somme, moyenne, etc...) les valeurs des différents critères déterminés à chaque intervalle de temps pour obtenir la mesure de l'attention finale.

Alternativement, on calcule une mesure de l'attention finale à la fin de la vidéo (ou fermeture) en combinant (somme, moyenne, etc...) les valeurs des différents critères déterminés à l'issue de la lecture de la publicité vidéo (ou sa fermeture).

Le procédé décrit ci-dessus peut être exécuté localement sur l'appareil de l'utilisateur, à distance sur des serveurs distants de l'appareil de l'utilisateur, situés par exemple dans la plate-forme publicitaire, ou par une combinaison d'exécutions locale et à distance.

Un système de mesure de l'attention d'un utilisateur à au moins une publicité vidéo dans une page internet comprend une plate-forme publicitaire, un script et un programme de lecture vidéo apte à afficher la publicité vidéo dans la page internet.

Le programme de lecture vidéo est exécuté sur l'appareil de l'utilisateur à travers un navigateur internet affichant la page internet. Le programme de lecture vidéo est apte à requérir la publicité à afficher auprès de la plate-forme publicitaire ou d'un tiers et à commander l'affichage de la publicité vidéo dans la page internet.

Le programme de lecture vidéo comprend un composant permettant de gérer les métadonnées et paramètres des publicités (et peut donc notamment être compatible avec la norme VPAID couramment utilisée).

Le format du fichier vidéo peut notamment être le mpeg4, le H26x, le flash, le HLS,... Le format n'est limité que par la programmation du programme de lecture vidéo.

La plate-forme publicitaire est un logiciel disposé sur un serveur distant (ou distribué sur plusieurs serveurs pour des raisons de temps de réponse et/ou de performance) et accessible via un réseau, notamment le réseau Internet.

La plate-forme publicitaire peut le cas échéant fournir un paramétrage des critères à mesurer au script de collecte. Elle récupère les données du script de collecte selon l'intervalle de temps défini, et peut le cas échéant, soit exécuter le procédé de mesure de l'attention, soit réceptionner la mesure de l'attention adressée par le procédé de mesure de l'attention exécuté par le script sur l'appareil de l'utilisateur.

Le « script » est développé dans un langage de programmation compatible avec la page internet avec laquelle il coopère, et avec le navigateur exécuté sur l'appareil de l'utilisateur affichant la page internet. On peut citer par exemple comme langage de programmation, le javascript, l'objective C, et le langage java.

Le script est soit inséré dans le code source de la page internet, soit incorporé dans un conteneur comprenant la publicité vidéo à afficher. Le conteneur est ouvrable et ouvert par le programme de lecture vidéo qui lit la publicité vidéo et adresse le script à destination du navigateur internet qui l'exécute.

Le script réalise la mesure des événements pour la détermination des différents critères employés dans la détermination de la mesure de l'attention par l'algorithme. Ces mesures sont réalisées à intervalles de temps réguliers (toutes les secondes par exemple).

Dans un mode de réalisation, le script transmet les événements mesurés à destination de la plate-forme publicitaire.

Dans un mode de réalisation alternatif, le script est également apte à déterminer la mesure de l'attention par application du procédé de mesure de l'attention en fonction des événements mesurés, puis à transmettre la mesure de l'attention déterminée à destination de la plate-forme publicitaire.

Le script peut être présent dans la page internet ou exécuté via un conteneur comprenant la publicité vidéo et ouvert par le programme de lecture vidéo.

Plus précisément, dans un mode de réalisation, le programme de lecture vidéo, à son initialisation, requête la plate-forme qui transmet la requête à un ou des fournisseurs de publicité, réceptionne la publicité, l'encapsule dans un conteneur incluant également le script de collecte (suivant la norme VPAID par exemple). La plate-forme retourne au programme de lecture vidéo l'adresse du conteneur plutôt que celle de la publicité vidéo à diffuser, et une fois initié par le lecteur, le conteneur lance la publicité vidéo ainsi que le script de collecte.

Dans un autre mode de réalisation, le script de collecte est directement posé dans la page internet. La publicité vidéo est fournie directement par le fournisseur de publicité au programme de lecture vidéo.

Un procédé de reciblage de la publicité vidéo affichée à l'utilisateur en fonction de la mesure d'attention va maintenant être décrit. Un procédé de reciblage de la publicité vidéo affichée à l'utilisateur peut être exécuté localement sur le poste de l'utilisateur dans la page internet ou requêté sur un ou plusieurs serveurs distants. Le procédé de reciblage de la publicité vidéo affichée à l'utilisateur détermine, en fonction de la mesure de l'attention, quelle publicité suivante diffuser à l'utilisateur, et transmet les paramètres de cette publicité vidéo au programme de lecture vidéo ou à la plate-forme publicitaire.

Le procédé de redirection de l'attention comprend les étapes suivantes.

On détermine les scénarios de diffusion d'une publicité alternative en fonction de la mesure de l'attention en temps réel à la première publicité affichée pour un premier produit d'une première marque, et ce à fin d'optimiser la performance de la publicité vidéo et de limiter le caractère intrusif perçu par l'utilisateur en lui diffusant des publicités qui ne l'intéressent pas. On note que par produit, on entend des produits matériels et immatériels tels que des services, et par marque, on entend des entreprises ou individus offrant à la vente ou à la location au moins un produit.

Si la mesure de l'attention de l'utilisateur est inférieure à un premier seuil, on conclut qu'il ne souhaite pas voir la première publicité vidéo. On arrête la diffusion de la première publicité (fermeture de l'emplacement vidéo ou affichage d'une nouvelle publicité vidéo) et on détermine de ne pas proposer de nouveau la première publicité vidéo.

Si la mesure de l'attention de l'utilisateur est supérieure au premier seuil mais inférieure à un deuxième seuil, on en déduit que l'utilisateur fait preuve d'une attention "moyenne". On commande l'affichage d'une deuxième publicité vidéo, variation de la publicité diffusée lors de la mesure de l'attention concernant le même produit et la même marque. La deuxième publicité vidéo peut être par exemple similaire à la première publicité vidéo mais incluant une offre promotionnelle ou un texte d'incitation à découvrir l'offre, ou une vidéo différente de la même marque sur un autre produit.

Si la mesure de l'attention de l'utilisateur est supérieure au deuxième seuil, on détermine que l'utilisateur fait preuve d'une très bonne attention. On commande alors l'affichage d'une troisième publicité vidéo de la même marque mais pour un autre produit, ou du même produit mais présentant une caractéristique différente ou une information nouvelle que celle présentée dans la première publicité vidéo.

La deuxième publicité vidéo ou la troisième publicité vidéo peut se substituer à la première publicité en temps réel (via les nouveaux paramètres adressés par le procédé de reciblage au programme de lecture vidéo ou à la plate-forme publicitaire). La lecture de la publicité vidéo peut se poursuivre dans un second emplacement de la page, ou dans la prochaine page visitée.

Les résultats des comparaisons au premier seuil et au deuxième seuil peuvent être conservés pour la suite de la navigation internet de l'utilisateur pour des pages internet aptes à interagir avec le procédé de mesure de l'attention et avec le procédé de redirection de l'attention.

## Revendications

1. Procédé de mesure de l'attention d'un utilisateur à au moins une publicité vidéo dans une page internet,
la page internet comprenant au moins un emplacement vidéo apte à afficher une publicité vidéo,
**caractérisé par le fait qu'**il comprend des étapes au cours desquelles :
lorsqu'une publicité vidéo est affichée dans au moins un emplacement vidéo,
on mesure des événements liés à au moins un parmi la structure de la page internet comprenant les emplacements vidéo dans lesquels la publicité vidéo est affichée et les actions de l'utilisateur,
on détermine au moins un critère lié aux événements mesurés,
on détermine ensuite une mesure de l'attention en fonction des valeurs des critères.

2. Procédé selon la revendication 1, dans lequel la mesure des événements est ponctuelle ou périodique à l'issue d'un intervalle de temps prédéterminé.

3. Procédé selon l'une quelconque des revendications précédentes, dans lequel un critère est lié à au moins un parmi la visibilité de l'emplacement vidéo dans le champ de vue de l'utilisateur, le rapport entre la surface de l'emplacement vidéo par la surface totale de l'écran visible de l'utilisateur, la position absolue de l'emplacement vidéo dans l'écran actif de l'utilisateur, la position du curseur de la souris dans la page, l'encombrement iconographique à proximité de l'emplacement vidéo, la vitesse de déplacement de l'utilisateur dans la page, les interactions de l'utilisateur avec l'emplacement vidéo, la durée de lecture de la publicité vidéo, et le mode de démarrage de la vidéo.

4. Procédé selon l'une quelconque des revendications précédentes, dans lequel, après la mesure des événements, et avant la détermination d'au moins un critère, on réalise un retraitement des mesures afin de ne pas tenir compte des événements mesurés pendant que la publicité vidéo n'est pas affichée, des événements mesurés avant le démarrage effectif de l'affichage de la publicité vidéo, des événements mesurés après une durée maximale d'affichage de la publicité vidéo, des événements mesurés en relation avec une mesure de la taille et de la position de l'emplacement vidéo supérieur à une valeur seuil liée à la taille de la page et/ou de l'écran actif.

5. Procédé de reciblage de la publicité vidéo affichée à l'utilisateur selon l'une quelconque des revendications précédentes, dans lequel, lorsque l'on affiche une première publicité vidéo pour un premier produit et pour une première marque,
on détermine si la mesure de l'attention de l'utilisateur est inférieure à un premier seuil,
si tel est le cas, on interrompt la diffusion de la première publicité vidéo, et on détermine de ne pas proposer de nouveau la première publicité vidéo, et on commande l'affichage d'une autre publicité vidéo pour une marque et un produit autre que le premier produit de la première marque,
si tel n'est pas le cas, on détermine si la mesure de l'attention de l'utilisateur est inférieure à un deuxième seuil supérieur au premier seuil,
si tel est le cas, on commande l'affichage d'une deuxième publicité vidéo, différente de la première vidéo, pour le premier produit et la première marque,
si tel n'est pas le cas, on commande alors l'affichage d'une troisième publicité vidéo de la première marque pour un produit autre que le premier produit ou pour le même produit mais présentant au moins une caractéristique ou information différente de celles présentées dans la première publicité vidéo.

6. Procédé selon la revendication 5, dans lequel les résultats de mesure de l'attention par rapport à un produit et/ou à une marque sont conservés lors du changement de page internet par l'utilisateur.

7. Procédé selon la revendication 5, dans lequel les résultats de mesure de l'attention par rapport à un produit et/ou à une marque sont conservés lorsqu'un nouvel emplacement vidéo diffuse la publicité vidéo dans la page internet vue par l'utilisateur.

8. Système de mesure de l'attention d'un utilisateur à au moins une publicité vidéo dans une page internet, la page internet comprenant au moins un emplacement vidéo apte à afficher une publicité vidéo,
**caractérisé par le fait qu'**il comprend
un script compris dans la page internet, apte à mesurer des événements liés à au moins un parmi la structure de la page internet comprenant au moins un emplacement vidéo dans lesquels la publicité vidéo est affichée et les actions de l'utilisateur,
un programme de lecture vidéo exécuté par l'utilisateur apte à requérir la publicité à afficher et à commander l'affichage de la publicité vidéo dans au moins un emplacement vidéo de la page internet,
une plate-forme publicitaire apte à recevoir les requêtes de publicités vidéo du programme de lecture vidéo, à adresser des requêtes de publicité à des tiers fournisseurs de publicités vidéo et à émettre une publicité vidéo ou une liste de publicités vidéo à destination du programme de lecture vidéo en fonction des informations reçues du script,
le script et la plate-forme publicitaire sont aptes à coopérer afin de déterminer une mesure de l'attention d'un utilisateur en fonction des événements mesurés par le script.

9. Système de mesure selon la revendication 8, comprenant un conteneur comprenant la publicité vidéo et le script, le conteneur étant ouvert par le programme de lecture vidéo,
le script étant adressé au navigateur internet pour être exécuté, la publicité vidéo étant affichée par le programme de lecture vidéo dans au moins un emplacement vidéo de la page internet.

10. Système de mesure selon l'une quelconque des revendications 8 ou 9, dans lequel le script est apte à déterminer au moins un critère lié aux événements mesurés, et à déterminer ensuite une mesure de l'attention en fonction des valeurs de ces critères et à l'émettre à destination de la plate-forme publicitaire.

11. Système de mesure selon l'une quelconque des revendications 8 ou 9, dans lequel la plate-forme publicitaire est apte à déterminer au moins un critère lié aux événements mesurés par le script, et à déterminer ensuite une mesure de l'attention en fonction des valeurs de ces critères.

12. Système de reciblage de la publicité vidéo affichée à l'utilisateur selon l'une quelconque des revendications 8 à 11, dans lequel la plate-forme publicitaire est apte à déterminer la publicité vidéo à afficher en fonction de la comparaison de la mesure d'attention à au moins un seuil prédéterminé.
